# EUROPÄISCHE PATENTSCHRIFT

(11) **EP 3 475 070 B1**
(45) Veröffentlichungstag und Bekanntmachung des Hinweises auf die Patenterteilung: **22.12.2021**
(21) Anmeldenummer: 17715446.5
(22) Anmeldetag: 03.04.2017
(51) Int. Cl.: B29D 30/02, B60C 7/10, B60C 7/08, B60C 11/11

(54) **VERFAHREN ZUR HERSTELLUNG EINES VOLLGUMMIREIFENS UND NACH DEM VERFAHREN HERGESTELLTER VOLLGUMMIREIFEN**
METHOD FOR PRODUCING A SOLID RUBBER TYRE AND SOLID RUBBER TYRE PRODUCED ACCORDING TO SAID METHOD
PROCÉDÉ DE FABRICATION D'UN BANDAGE PLEIN EN CAOUTCHOUC, ET BANDAGE PLEIN EN CAOUTCHOUC FABRIQUÉ SELON LEDIT PROCÉDÉ

(30) Priorität: 24.06.2016 DE 102016211332
(43) Veröffentlichungstag der Anmeldung: 01.05.2019
(73) Patentinhaber: Continental Reifen Deutschland GmbH, 30165 Hannover (DE)
(72) Erfinder: SCHMIDT, Peter, 31275 Lehrte (DE); MÜLLER, Matthias-Stephan, 30827 Garbsen (DE); HEINRICH, Nikolas, 30823 Garbsen (DE); HALLMANN, Steffen, 30171 Hannover (DE); MINX, Carsten, 31535 Neustadt (DE)
(74) Vertreter: Continental Corporation
(86) Internationale Anmeldenummer: PCT/EP2017/057797
(87) Internationale Veröffentlichungsnummer: WO 2017/220227

(56) Entgegenhaltungen:
- DE-A1- 4 009 500
- DE-A1-102007 055 036
- DE-A1-102010 037 571
- DE-A1-102011 052 808
- FR-A- 1 255 661
- GB-A- 1 032 746
- US-A1- 2003 178 125
- US-A1- 2015 013 863

## Beschreibung

Die Erfindung betrifft ein Verfahren zur Herstellung eines Vollgummireifens für eine mobile Arbeitsmaschine, aus einem Grundkörper, welcher einen radial inneren, mit einer Felge in Kontakt kommenden Bodenteil und einen radial äußeren Elastikteil aufweist, sowie aus einem profilierten Laufflächenteil und zwei seitlichen Reifenflanken, welche zumindest den Elastikteil seitlich bedecken, wobei der Bodenteil und der Elastikteil jeweils durch ein mehrlagiges Wickeln einer kalandrierten Kautschukmischung aufgebaut werden, und wobei der Laufflächenteil und die beiden seitlichen Reifenflanken ebenfalls aus Kautschukmischungen gebildet werden.

Rohlinge für Vollgummireifen werden im Stand der Technik in einem Aufbauverfahren gefertigt, bei dem die einzelnen kalandrierten Kautschukmischungen für den Bodenteil, den Elastikteil und den Laufflächenteil nacheinander mehrlagig auf einer Wickelvorrichtung, einer Wickelaufnahme, gewickelt werden und die seitlichen Reifenflanken angedrückt werden. Anschließend wird der Reifenrohling in einer Heizform vulkanisiert, die im Laufflächenteil die vorgesehene Profilierung einprägt und dem Vollgummireifen die gewünschten Außenkonturen verleiht. Beim Einformen des Reifenrohlings in die Heizform und beim Heizprozess finden massive und nicht beeinflussbare Fließprozesse der verschiedenen Gummimischungen statt, sodass im fertig vulkanisierten Reifen eine Materialverteilung vorliegt, die nicht der gewünschten Fertigteilspezifikation entspricht. Denn Rohlinge für Vollreifen müssen mit mehr Volumen gefertigt werden, als für das Endfabrikat benötigt ist, um einen Druckaufbau in der Vulkanisierform zu gewährleisten und um eine Unterfüllung zu vermeiden. Dies hat zur Folge, dass die Eigenschaften der Vollgummireifen gewissen Schwankungen unterliegen, die durch den Fertigungsprozess bedingt sind. Bestimmte Fließprozesse können sogar dazu führen, dass Reifen verworfen werden müssen. Es hat sich gezeigt, dass insbesondere Vollreifen mit einer Profilierung den vorgenannten Schwankungen unterliegen.

Die DE 10 2007 055 036 A1 offenbart einen die üblichen Bestandteile aufweisenden Vollgummireifen, in dessen Elastikschicht Hohlkugel enthalten sind. Bei dem aus der DE 10 2011 052 808 A1 bekannten, ebenfalls den üblichen Aufbau aufweisenden Vollgummireifen ist zusätzlich radial innerhalb des Laufflächenteils ein Druck oder Verformungen erfassender Sensor einbaut.

Aus der US 2002/0129883 A1 ist es bekannt, die Bauteile eines Vollreifens jeweils in separaten Vulkanisierformen zu vulkanisieren und anschließend zum Vollreifen zusammenzufügen.

Die DE 40 09 500 A1 offenbart ein Verfahren zur Herstellung eines Fahrzeugluftreifens, welcher in den Umfangsrillen des Laufstreifens Abriebindikatoren aufweist. Es ist als bekannt angegeben, solche Umfangsrillen am rohen, unvulkanisierten Laufstreifen vorzuprofilieren, um die Fließprozesse bei der Vulkanisation zu reduzieren, wodurch eine präzise Profilausformung erreicht werden soll.

Die US 2015/0013863 A1 offenbart einen Landwirtschaftsreifen mit einem ein Stollenprofil aufweisenden Laufstreifen sowie einem Gürtelkorde enthaltenden Gürtel. In den rohen Laufstreifen wird mittels eines Shaping Rollers eine Profilierung eingeprägt. Der Laufstreifen wird anschließend mit der Reifenkarkasse verbunden und es wird der Reifen in einer Vulkanisationsform vulkanisiert.

Aus der FR 1 255 661 A1 ist ein laminiertes Formelement aus Gummi und Kunststoff bekannt. Zur Herstellung des Formelementes wird zunächst in einer Form eine Kunststoffschicht geformt, anschließend wird die unvulkanisierte Gummischicht eingebracht und es werden die Schichten durch Vulkanisation zusammengefügt. Die hergestellten Elemente sind etwa Schuhabsätze, Förderbandüberzüge oder Vollgummireifen.

Aus der DE 10 2010 037571 A1 ist eine Vorrichtung und ein Verfahren zur Herstellung von Bodenteilen für Vollgummireifen bekannt.

Der Erfindung liegt die Aufgabe zu Grunde, einen Vollgummireifen der eingangs genannten Art derart herstellen zu können, dass die Materialverteilung, insbesondere jene zwischen dem Laufflächenteil und dem Grundkörper, gezielt beeinflusst werden kann und die diesbezüglich erwünschte Materialverteilung im fertig vulkanisierten Vollgummireifen gegeben ist.

Gelöst wird die gestellte Aufgabe mittels des erfindungsgemäßen Verfahrens dadurch, dass das unvulkanisierte Laufflächenteil gesondert hergestellt wird, dass dieses Laufflächenteil eine Bodenplatte und eine von einer Oberfläche der Bodenplatte aufwachsende vorgeformte Profilierung aufweist, dass dieses gesondert hergestellte Laufflächenteil in die gegengleich geformten Formflächen der Vulkanisierform einlegt wird, dass anschließend der unvulkanisierte Grundkörper in die Vulkanisierform eingebracht wird und dass anschließend die Vulkanisierform geschlossen, der Grundkörper mit dem Laufflächenteil in Berührung und der Vollreifen vulkanisiert wird.

Erfindungswesentlich ist, dass das unvulkanisierte Laufflächenteil derart vorgeformt ist, dass dieses eine Profilierung aufweist, welche annährend der Profilierung des fertig vulkanisierten Reifens entspricht und dass das Laufflächenteil gesondert und zeitlich getrennt vom Grundkörper, nämlich eher als dieser, in die Vulkanisierform eingelegt wird. Der Grundkörper wird wie bekannt und üblich aufgebaut. Das Laufflächenteil und der Grundkörper sind beide noch unvulkanisiert, wenn diese in die Vulkanisierform eingebracht werden. Beim Zusammenfahren der Vulkanisierform kommen das Laufflächenteil und der Grundkörper in Kontakt und werden im anschließenden Vulkanisationsprozeß zu einem fertigen Reifen vulkanisiert. Hierdurch ist die Materialverteilung, insbesondere jene zwischen dem Laufflächenteil und dem Grundkörper, gezielt beeinflussbar und die diesbezüglich erwünschte Materialverteilung im fertig vulkanisierten Vollgummireifen ist gegeben.

Vorteilhaft ist es, wenn das vorgeformte unvulkanisierte Laufflächenteil eine Profilierung aufweist, welche annähernd der Profilierung des fertigen Vollgummireifens entspricht, dass jedoch deren Profilpositive (10) ein geringeres Volumen als das des fertig vulkanisierten Reifens aufweist, so dass das Rillenvolumen des vorgeformten unvulkanisierten Laufflächenteiles um 0,5% - 5%, vorzugsweise um 1% - 2%, größer ist als das Rillenvolumen des fertig vulkanisierten Reifens. Das Rillenvolumen ist das sogenannte "Leervolumen" oder auch "Void". Das Rillenvolumen wird durch die Summe der "Luftvolumina" sämtlicher Rillenzwischen den Rillenbegrenzungen und einer Einhüllenden der Laufstreifenperipherie ermittelt.

Zweckmäßig ist es, wenn die Bodenplatte des Laufflächenteiles eine Stärke (im Wortsinn der Dicke) von 5 mm bis 30 mm, vorzugsweise eine Stärke von 10 mm - 20 mm aufweist. Hierdurch ist das Laufflächenteil stabil und kann ohne Beschädigungen wie Einrisse verarbeitet werden.

Das unvulkanisierte Laufflächenteil ist einstückig oder mehrstückig, vorzugsweise mit Teilungen in radialer Richtung. Wenn das Laufflächenteil einstückig ist, ist es sehr schwer an Gewicht, kann aber mit einem Arbeitsschritt in die Vulkanisierform eingebracht werden. Wenn das Laufflächenteil mehrstückig ist, sind die einzelnen Laufflächenteil-Stücke geringer an Gewicht, können leichter, aber in mehreren Schritten in die Vulkanisierform eingebracht werden.

Die Vulkanisierform ist eine segmentierte oder mittengeteilte Vulkanisierform.

Die Erfindung betrifft ferner einen Vollgummireifen, welcher nach dem erfindungsgemäßen Verfahren hergestellt ist.

Weitere Merkmale, Vorteile und Einzelheiten der Erfindung werden nun anhand der Zeichnungen, die schematische Ausführungsbeispiele der Erfindung darstellen, näher beschrieben. Dabei zeigen die
- Fig. 1: einen Querschnitt durch einen Vollgummireifen;
- Fig. 2: eine dreidimensionale Ansicht eines Abschnittes eines gesondert vorgefertigten, unvulkanisierten Laufflächenteiles.

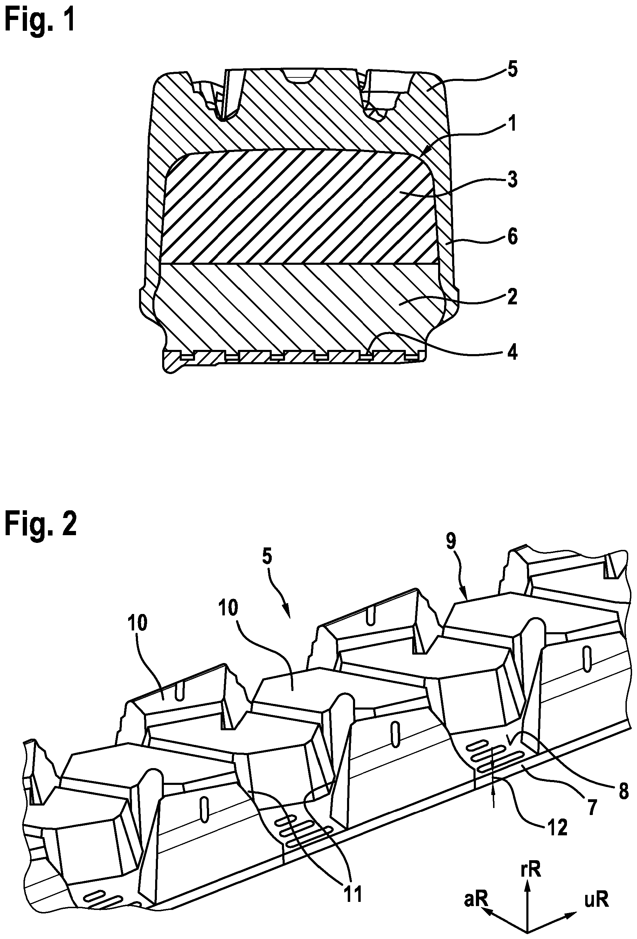

Die Figuren 1 und 2 werden nachfolgend zusammen beschrieben.

Vollgummireifen gemäß der Erfindung sind insbesondere Reifen für mobile Arbeitsmaschinen, wie Flurförderzeuge, beispielsweise Gabelstapler oder Telehandler. Gemäß dem in Fig. 1 gezeigten Querschnitt durch einen Vollgummireifen weist dieser einen Grundkörper 1 aus einem radial inneren Bodenteil 2 und einem auf diesem befindlichen Elastikteil 3 auf. Der Bodenteil 2 besteht üblicherweise aus einer harten Gummimischung und enthält zumindest ein zugfestes Insert, bei der dargestellten Ausführungsform mehrere in Umfangsrichtung des Reifens umlaufende zugfeste, metallische Kerne 4, und ist jener Teil des Reifens, welcher mit einer Felge in Kontakt kommt. Die Felge kann in herkömmlicher Weise ausgeführt sein, ist nicht Gegenstand der Erfindung und daher auch nicht dargestellt.

Der Elastikteil 3 bildet im Vollgummireifen eine elastische Zwischenschicht, deren Gummimaterial auf Federungs- und Dämpfungseigenschaften optimiert ist. Ein radial außerhalb des Grundkörpers 1 auf diesem befindlicher Laufflächenteil 5, welcher in an sich bekannter Weise mit einer Profilierung versehen sein kann, komplettiert gemeinsam mit seitlichen Reifenflanken 6 den Vollgummireifen. Die Reifenflanken 6 bedecken seitlich bzw. umschließen seitlich den Elastikteil 3 und bei der gezeigten Ausführung auch zumindest die radial äußeren Bereiche des Bodenteils 2.

Der Bodenteil 2, der Elastikteil 3, der Laufflächenteil 5 und die Reifenflanken 6 bestehen aus vulkanisierten Gummimaterialien, der Laufflächenteil 5 und die Reifenflanken 6 vorzugsweise aus dem gleichen Gummimaterial, die anderen Bestandteile aus voneinander verschiedenen Gummimaterialien und werden jeweils aus einer separaten, auf die erwünschten Eigenschaften des betreffenden Bauteils abgestimmten Kautschukmischung gefertigt.

Der Aufbau bzw. die Herstellung des unvulkanisierten Grundkörpers 1 erfolgt auf einer Wickelvorrichtung, insbesondere einer sogenannten Wickelaufnahme, auf welche vorerst eine in Umfangsrichtung des Reifens umlaufende Lage der für den Bodenteil 2 vorgesehenen, kalandrierten Kautschukmischung aufgebracht wird. Auf dieser Lage werden die Kerne 4 in der vorgesehenen Anzahl nebeneinander platziert. Anschließend wird der Bodenteil 2 durch Wickeln von weiteren Lagen der kalandrierten Kautschukmischung aufgebaut. Auf den Bodenteil 2 wird der Elastikteil 3 aus der für den Elastikteil 3 vorgesehenen und kalandrierten Kautschukmischung ebenfalls in mehreren Lagen gewickelt.

Das unvulkanisierte Laufflächenteil 5 wird gesondert hergestellt, wobei dieses Laufflächenteil 5 eine Bodenplatte 7 und eine von einer Oberfläche 8 der Bodenplatte aufwachsende vorgeformte Profilierung 9 aufweist. Die Profilpositiven sind Profilblöcke 10, welche durch Rillen 11 voneinander getrennt sind. Dieses gesondert hergestellte Laufflächenteil 5 wird in die gegengleich geformten Formflächen der Vulkanisierform (nicht dargestellt) einlegt. Nachfolgend wird der unvulkanisierte Grundkörper 1 in die Vulkanisierform eingebracht. Alle noch unvulkanisierten Bauteile des Vollreifens sind nun in die Vulkaniserform verbracht, so dass die Vulkanisierform geschlossen wird und der Grundkörper 1 mit dem Laufflächenteil 5 in Berührung kommt und der Vollreifen seine erwünschte und vorgesehene Querschnittsgestalt erhält. Durch entsprechende Zufuhr von Wärme wird über eine vorbestimmte Zeit wird der Vollreifen ausvulkanisiert.

Das vorgeformte unvulkanisierte Laufflächenteil 5 weist eine Profilierung 9 aus Profilpositiven, hier Profilblöcken 10, und aus Profilrillen 11 auf, welche annähernd der Profilierung des fertigen Vollgummireifens entspricht. Jedoch weisen die Profilpositive ein geringeres Volumen als das des fertig vulkanisierten Reifens auf, so dass das Rillenvolumen des vorgeformten unvulkanisierten Laufflächenteiles 5 um 0,5% - 5%, vorzugsweise um 1% - 2% größer ist als das Rillenvolumen des fertig vulkanisierten Reifens. Die Bodenplatte 7 des Laufflächenteiles weist eine Stärke 12 von 10 mm bis 20 mm auf. Das Laufflächenteil 7 ist in mehrere einzelne Stücke geteilt, welche in die Vulkansierform eingelegt werden und das komplett über den Umfang umlaufende Laufflächenteil 7 bilden.

### Bezugsziffernliste

- 1: Grundkörper
- 2: Bodenteil
- 3: Elastikteil
- 4: zugfester Kern
- 5: Laufflächenteil
- 6: seitliche Reifenflanke
- 7: Bodenplatte
- 8: Oberfläche der Bodenplatte
- 9: Profilierung
- 10: Profilblock
- 11: Rille
- 12: Stärke der Bodenplatte

- aR: axiale Richtung
- rR: radiale Richtung
- uR: Umfangsrichtung

## Patentansprüche

1. Verfahren zur Herstellung eines Vollgummireifens für eine mobile Arbeitsmaschine, aus einem Grundkörper (1), welcher einen radial inneren, mit einer Felge in Kontakt kommenden Bodenteil (2) und einen radial äußeren Elastikteil (3) aufweist, sowie aus einem profilierten Laufflächenteil (5) und zwei seitlichen Reifenflanken (6), welche zumindest den Elastikteil (3) seitlich bedecken, wobei der Bodenteil (2) und der Elastikteil (3) jeweils durch ein mehrlagiges Wickeln einer kalandrierten Kautschukmischung aufgebaut werden, und wobei der Laufflächenteil (5) und die beiden seitlichen Reifenflanken (6) ebenfalls aus Kautschukmischungen gebildet werden,
**dadurch gekennzeichnet,**
**dass** das unvulkanisierte Laufflächenteil (5) gesondert hergestellt wird, wobei dieses Laufflächenteil (5) eine Bodenplatte (7) und eine von einer Oberfläche (8) der Bodenplatte (7) aufwachsende vorgeformte Profilierung (9) aufweist, dass dieses gesondert hergestellte Laufflächenteil (5) in die gegengleich geformten Formflächen der Vulkanisierform einlegt wird,
**dass** anschließend der unvulkanisierte Grundkörper (1) in die Vulkanisierform eingebracht wird
und **dass** anschließend die Vulkanisierform geschlossen, der Grundkörper (1) mit dem Laufflächenteil (5) in Berührung und der Vollreifen vulkanisiert wird.

2. Verfahren zur Herstellung eines Vollgummireifens nach Anspruch 1, **dadurch gekennzeichnet, dass** das vorgeformte unvulkanisierte Laufflächenteil (5) eine Profilierung (9) aufweist, welche annähernd der Profilierung des fertigen Vollgummireifens entspricht, dass jedoch deren Profilpositive (10) ein geringeres Volumen als das des fertig vulkanisierten Reifens aufweist, so dass das Rillenvolumen des vorgeformten
unvulkanisierten Laufflächenteiles um 0,5% - 5%, vorzugsweise um 1% - 2% größer ist als das Rillenvolumen des fertig vulkanisierten Reifens.

3. Verfahren zur Herstellung eines Vollgummireifens nach Anspruch 1, **dadurch gekennzeichnet, dass** die Bodenplatte (7) des Laufflächenteiles (5) eine Stärke (12) von 5 mm bis 30 mm, vorzugsweise eine Stärke (12) von 10 mm ― 20 mm aufweist.

4. Verfahren zur Herstellung eines Vollgummireifens nach einem der Ansprüche 1 bis 3, **dadurch gekennzeichnet, dass** das Laufflächenteil (5) einstückig oder mehrstückig, vorzugsweise mit Teilungen in radialer Richtung, ist.

5. Verfahren zur Herstellung eines Vollgummireifens nach einem der Ansprüche 1 bis 4, **dadurch gekennzeichnet, dass** die Vulkanisierform eine segmentierte oder mittengeteilte Vulkanisierform ist.

## Claims

1. Process for producing a solid rubber tyre for mobile machinery composed of a main body (1) having a radially inner base part (2) contacting a wheel rim and a radially outer elastic part (3) as well as a profiled tread part (5) and two lateral tyre flanks (6) which laterally cover at least the elastic part (3), wherein the base part (2) and the elastic part (3) are each constructed by multilayered winding of a calendered rubber mixture and wherein the tread part (5) and the two lateral tyre flanks (6) are likewise formed from rubber mixtures, **characterized in that**
the unvulcanized tread part (5) is separately produced, wherein this tread part (5) comprises a base plate (7) and a preformed profile (9) projecting from the surface (8) of the base plate (7), **in that** this separately produced tread part (5) is inserted in the oppositely shaped mould surfaces of the vulcanization mould,
**in that** the unvulcanized main body (1) is then introduced into the vulcanization mould and **in that** the vulcanization mould is then closed, the main body (1) is brought into contact with the tread part (5) and the solid tyre is vulcanized.

2. Process for producing a solid rubber tyre according to Claim 1, **characterized in that** the preformed unvulcanized tread part (5) comprises a profile (9) which approximately corresponds to the profile of the finished solid rubber tyre but **in that** the profile positive (10) thereof has a smaller volume than that of the finished vulcanized tyre so that the groove volume of the preformed unvulcanized tread part is 0.5%-5%, preferably 1%-2%, greater than the groove volume of the finished vulcanized tyre.

3. Process for producing a solid rubber tyre according to Claim 1, **characterized in that** the base plate (7) of the tread part (5) has a thickness (12) of 5 mm to 30 mm, preferably a thickness (12) of 10 mm - 20 mm.

4. Process for producing a solid rubber tyre according to any of Claims 1 to 3, **characterized in that** the tread part (5) is a single-piece or multi-piece tread part, preferably with divisions in the radial direction.

5. Process for producing a solid rubber tyre according to any of Claims 1 to 4, **characterized in that** the vulcanization mould is a segmented or centre-split vulcanization mould.

## Revendications

1. Procédé de fabrication d'un bandage plein en caoutchouc pour une machine de travail mobile, composé d'un corps principal (1) qui présente une partie base (2) radialement intérieure, entrant en contact avec une jante, et une partie élastique (3) radialement extérieure, ainsi que d'une partie de bande de roulement profilée (5) et de deux flancs de pneu latéraux (6) qui recouvrent latéralement au moins la partie élastique (3), la partie base (2) et la partie élastique (3) étant respectivement réalisées par enroulement d'un mélange de caoutchouc calandré sur plusieurs couches, et la partie de bande de roulement (5) et les deux flancs de pneu latéraux (6) étant également formés à partir de mélanges de caoutchouc,
**caractérisé**
**en ce que** la partie de bande de roulement (5) non vulcanisée est fabriquée à part, cette partie de bande de roulement (5) présentant un panneau de base (7) et des sculptures (9) préformées s'élevant à partir d'une surface (8) du panneau de base (7),
**en ce que** cette partie de bande de roulement (5) fabriquée à part est insérée dans les surfaces de moule de formes diamétralement opposées du moule de vulcanisation,
**en ce qu'**ensuite le corps principal (1) non vulcanisé est introduit dans le moule de vulcanisation, et
**en ce qu'**ensuite le moule de vulcanisation est fermé, le corps principal (1) est mis en contact avec la partie de bande de roulement (5) et le bandage plein est vulcanisé.

2. Procédé de fabrication d'un bandage plein en caoutchouc selon la revendication 1, **caractérisé en ce que** la partie de bande de roulement (5) non vulcanisée préformée présente des sculptures (9) qui correspondent approximativement aux sculptures du bandage plein en caoutchouc terminé, mais **en ce que** l'élément de sculpture positif (10) de celle-ci présente un volume inférieur à celui du pneu vulcanisé terminé de sorte que le volume de rainure de la partie de bande de roulement non vulcanisée préformée est supérieur de 0,5 % à 5 %, de préférence de 1 % à 2 % au volume de rainure du pneu vulcanisé terminé.

3. Procédé de fabrication d'un bandage plein en caoutchouc selon la revendication 1, **caractérisé en ce que** le panneau de base (7) de la partie de bande de roulement (5) présente une épaisseur (12) de 5 mm à 30 mm, de préférence une épaisseur (12) de 10 mm à 20 mm.

4. Procédé de fabrication d'un bandage plein en caoutchouc selon l'une quelconque des revendications 1 à 3, **caractérisé en ce que** la partie de bande de roulement (5) est réalisée en une seule pièce ou en plusieurs pièces, de préférence avec des séparations dans la direction radiale.

5. Procédé de fabrication d'un bandage plein en caoutchouc selon l'une quelconque des revendications 1 à 4, **caractérisé en ce que** le moule de vulcanisation est un moule de vulcanisation segmenté ou divisé au milieu.
